# EUROPÄISCHE PATENTSCHRIFT

(11) **EP 2 353 358 B1**
(45) Veröffentlichungstag und Bekanntmachung des Hinweises auf die Patenterteilung: **28.11.2012**
(21) Anmeldenummer: 11153056.4
(22) Anmeldetag: 02.02.2011
(51) Int. Cl.: A01C 15/00

(54) **Landwirtschaftliche Vorrichtung**
Agricultural device
Dispositif agricole

(30) Priorität: 04.02.2010 DE 102010000294
(43) Veröffentlichungstag der Anmeldung: 10.08.2011
(73) Patentinhaber: Amazonen-Werke H. Dreyer GmbH & Co. KG, 49205 Hasbergen (DE)
(72) Erfinder: Johannaber, Stefan, Jan, 49536 Lienen (DE); Holthaus, Stefan, 49509 Recke (DE)

(56) Entgegenhaltungen:
- EP-A2- 1 110 440
- DE-A1- 1 492 782
- DE-A1- 10 319 047
- DE-A1-102005 034 282
- FR-A1- 2 716 332
- US-A- 4 027 788

## Beschreibung

Die Erfindung betrifft ein Baukastensystem für eine landwirtschaftliche Verteilmaschine gemäß dem Oberbegriff des Patentanspruches 1.

Landwirtschaftliche Verteilmaschinen sind beispielsweise durch die DE 697 01 887 T3 bekannt. Diese Verteilmaschine ist als Zentrifugaldüngerstreuer zum Ausbringen von körnigen Materialien ausgebildet. Dieser Zentrifugalstreuer weist einen Rahmen auf, an dem ein Vorratsbehälter mit zwei Auslauftrichtern befestigt ist. Der obere Bereich des Auslauftrichters mündet in zwei Auslauftrichtern aus, die jeweils durch Dosiervorrichtungen nach unten abgeschlossen sind. Diese Dosiervorrichtungen führen das sich im Vorratsbehälterbehälter und den Auslauftrichtern befindliche Material in einstellbaren Mengen den unterhalb der Dosiervorrichtungen angeordneten und rotierend angetriebenen Schleuderscheiben zu. Der Vorratsbehälter mit seinen beiden Auslauftrichtern besteht aus Vorder- Rück- und Seitenwänden, sowie Wänden des dachförmigen Mittelteils. Die Wände des Vorratsbehälter und der Auslauftrichter sind als unabhängige Wände ausgebildet und miteinander zu einem Vorratsbehälter mit Auslauftrichter durch Schraubverbindungen verbunden. Hierdurch ergibt sich eine zeitaufwendige Montageweise des Vorratsbehälters mit den Auslauftrichtern.

Des weiteren sind in der Praxis Verteilmaschinen bekannt geworden, bei denen die Vorratsbehälter in zumindest zwei Auslauftrichtern ausmünden, die ebenfalls aus einzelnen Wänden bestehen. Diese unabhängigen Wände sind mittels Schweißverbindungen zu einem Vorratsbehälter mit zwei Auslauftrichtern zusammengefügt sind. Auch diese Ausgestaltung ist fertigungstechnisch zeitaufwendig. Darüber hinaus neigen die Schweißnähte, mittels denen die einzelnen Wände zusammengefügt sind, zur Rostbildung in dem rauen landwirtschaftlichen Einsatzbetrieb, wobei teilweise aggressive und den Rost fördernden Materialien ausgebracht werden. Ein weiteres Beispiel eines Baukastensystems für eine landwirtschaftliche Verteilmaschine gemäß dem Oberbegriff des Anspruchs 1 ist aus dem Dokument FR 2716322 A1 bekannt.

Der Erfindung liegt die Aufgabe zugrunde, die Fertigung von Vorratsbehältern, der in zwei Auslauftrichter ausmündet, wesentlich zeitlich zu verbessern, wobei eine einfache Austauschbarkeit der einzelnen Bauteile der Verteilmaschine möglich sein soll.

Diese Aufgabe wird erfindungsgemäß dadurch gelöst, dass der Vorratsbehälter aus
- einem an den Rahmenelementen angeordneten Grundbehälter,
- an dem oberen umlaufenden Bereich des Grundbehälter zumindest einem sich anschließenden Aufsatzelement,
- an den jeweiligen unteren Bereichen der Auslauftrichter angeordneten und Auslaufbereiche aufweisenden Dosiervorrichtungen
besteht, und die weiteren im Anspruch 1 beanspruchten Merkmale aufweist.

Infolge dieser Maßnahmen werden die wesentlichen und die Verteilmaschine nach Art eines Baukastensystems je nach Erfordernis und/oder Einsatzbedingungen einander zugeordnet und zusammengestellt. Eine einfache Austauschbarkeit der einzelnen Bauteile ist bei Beschädigung möglich.

Erfindungsgemäß ist vorgesehen, dass der Vorratsbehälter mit seinen Auslauftrichtern einteilig aus einer Stahlblechplatte in seine Behälterform durch Tiefziehvorgänge als ein einziges Tiefziehteil ausgebildet ist. Infolge dieser Maßnahmen wird in geschlossener Herstellungsweise ein in zwei Auslauftrichtern ausmündender Vorratsbehälter geschaffen, der als ein einziges Bauteil ohne Verbindungsstellen und Nähten hergestellt und ausgestaltet ist. Weiterhin lässt sich ein derartiges Teil mit entsprechenden Rundungen und Neigungen ausgestalten, so dass ein vorteilhaftes Nachrutschen des sich im Vorratsbehälter und den Auslauftrichtern befindlichen Materiales zu den Dosiereinrichtungen ohne nennenswerte Staubildung im Vergleich den Ausgestaltungen von Vorratsbehältern nach dem Stand der Technik besteht. Hierbei wird für die Fertigung von Vorratsbehältern, der in zwei Auslauftrichter ausmündet, eine wesentliche zeitlich Verbesserung erreicht, wobei rostbildende Stellen an dem Vorratsbehälter und Auslauftrichter minimiert werden.

In einer anderen, nicht erfindungsgemäßen Ausgestaltung ist vorgesehen, dass der Vorratsbehälter mit seinen Auslauftrichtern einteilig aus einem Kunststoffmaterial hergestellt ist. Infolge dieser Maßnahme wird in geschlossener Herstellungsweise ein in zwei Auslauftrichtern ausmündender Vorratsbehälter geschaffen, der als ein einziges Bauteil ohne Verbindungsstellen und Nähten hergestellt und ausgestaltet ist. Weiterhin lässt sich ein derartiges Teil mit entsprechenden Rundungen und Neigungen ausgestalten, so dass ein vorteilhaftes Nachrutschen des sich im Vorratsbehälter und den Auslauftrichtern befindlichen Materiales zu den Dosiereinrichtungen ohne nennenswerte Staubildung im Vergleich den Ausgestaltungen von Vorratsbehältern nach dem Stand der Technik besteht.

Die vorteilhafte Ausgestaltung des Vorratsbehälters mit zwei Auslauftrichtern zur Schaffung der voneinander getrennten Auslauftrichtern, die mit Dosiervorrichtung abgeschlossen werden, lässt sich dadurch erreichen, dass die Auslauftrichter durch einen durch die Tiefvorgänge ausgebildeten dachförmigen Bereich getrennt sind.

Um die Voraussetzung für eine vorteilhafte Anordnung eines Sieb- und Sicherheitselementes im Vorratsbehälter zu schaffen, ist vorgesehen, dass in den Wandungen jedes Auslauftrichters ein stufenförmiger, vorzugsweise umlaufender Absatz eingeprägt und/oder eingeformt ist. Hierdurch lässt sich in einfacher Weise ein Siebelement in dem Bereich des stufenförmigen Absatzes einsetzen.

Eine vorteilhafte Anordnung und Befestigung des Siebelementes, welches gleichzeitig als Sicherheitselement dient, lässt sich dadurch erreichen, dass im Bereich des stufenförmigen Absatz ein Siebelement mittels Halterungs- und/oder Auflageelementen, vorzugsweise beabstandet zu den Wänden des Vorratsbehälters angeordnet ist.

Um eine ausreichende Tragfähigkeit des Vorratsbehälters sicherzustellen, ist vorgesehen, dass oberhalb des durch den Tiefziehvorgang ausgebildeten dachförmigen Bereiches ein mit diesem verbundenes Aussteifungselement angeordnet ist.

Um in vorteilhafter Weise ein ausreichend großes Fassungsvermögen entsprechend der jeweiligen Einsatzbedingungen, auch im Rahmen eines Baukastensystem zu gewährleisten, ist vorgesehen, dass an dem oberen umlaufenden Bereich des Vorratsbehälter sich zumindest ein anschließendes Aufsatzelement angeordnet ist. Hierdurch kann das Fassungsvermögen des Vorratsbehälters in einfacher Weise den jeweils gegebenen Einsatzbedingungen angepasst werden.

Eine einfache Anordnung von Rührelementen oberhalb der Dosiervorrichtung lässt sich dadurch gewährleisten, dass an den unteren Bereich der Auslauftrichter Befestigungselemente für die Anordnung der Dosiervorrichtungen, vorzugsweise mit einer Schweißverbindung angeordnet sind.

Um in vorteilhafter Weise eine große Langlebigkeit des Vorratsbehälters zu erreichen ist vorgesehen, dass der Vorratsbehälter aus einem zumindest annähernd rostfreien oder rostträgem Material hergestellt ist.

Die Verteilmaschine kann auch als Sä- und/oder Düngermaschine ausgebildet sein, wobei die Dosiervorrichtungen als Zellendosierradsystem ausgebildet ist.

Weitere Einzelheiten der Erfindung sind der Beispielsbeschreibung und den Zeichnungen zu entnehmen. Hierbei zeigen

Weitere Einzelheiten der Erfindung sind der Beispielsbeschreibung und den Zeichnungen zu entnehmen. Hierbei zeigen
- Fig. 1: eine erfindungsgemäße landwirtschaftliche Verteilmaschine im Rahmen des Baukastensystems in perspektivischer Darstellung,
- Fig. 2: die erfindungsgemäße Verteilmaschine in der Ansicht von hinten,
- Fig. 3: einen erfindungsgemäßen Vorratsbehälter der Verteilmaschine mit den darin angeordneten Siebelementen in perspektivischer Darstellung, der aus in Tiefziehvorgängen aus einer Stahlblechplatte geformt ist,
- Fig. 4: den erfindungsgemäßen Vorratsbehälter der Verteilmaschine in perspektivischer Darstellung,
- Fig. 5: den erfindungsgemäßen Vorratsbehälter der Verteilmaschine im Längsschnitt,

- Fig. 6: die rechte Hälfte des erfindungsgemäßen Vorratsbehälter der Verteilmaschine im Längsschnitt gemäß Fig. 5 in vergrößertem Maßstab,
- Fig. 7: einen erfindungsgemäßen Vorratsbehälter der Verteilmaschine mit den darin angeordneten Siebelementen in perspektivischer Darstellung, der aus einem Kunststoffmaterial hergestellt ist,
- Fig. 8: den erfindungsgemäßen Vorratsbehälter der Verteilmaschine nach Fig. 7 in perspektivischer Darstellung,
- Fig. 9: den erfindungsgemäßen Vorratsbehälter der Verteilmaschine nach Fig. 7 im Längsschnitt und
- Fig. 10: die rechte Hälfte des erfindungsgemäßen Vorratsbehälter der Verteilmaschine im Längsschnitt gemäß Fig. 9 in vergrößertem Maßstab.

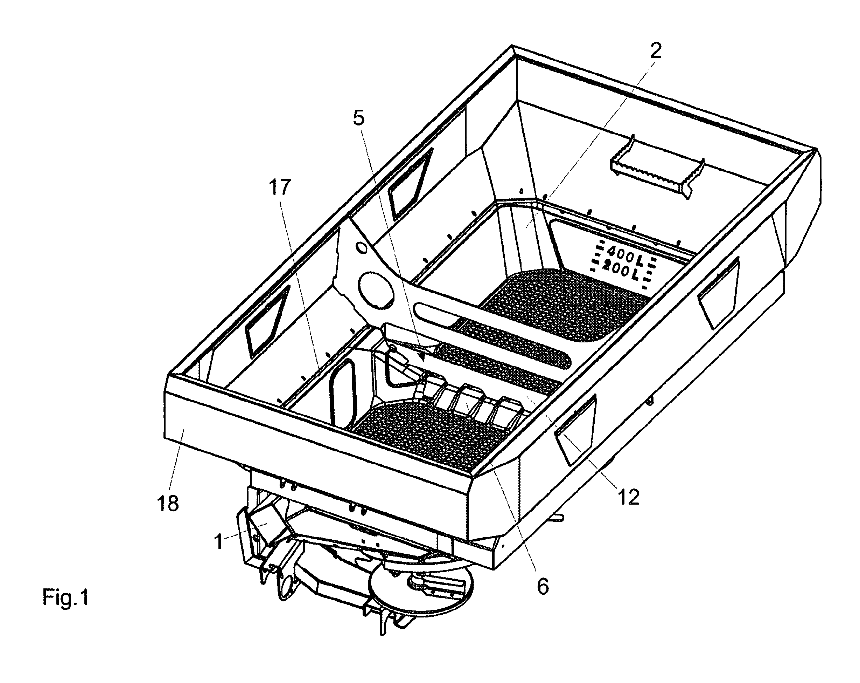

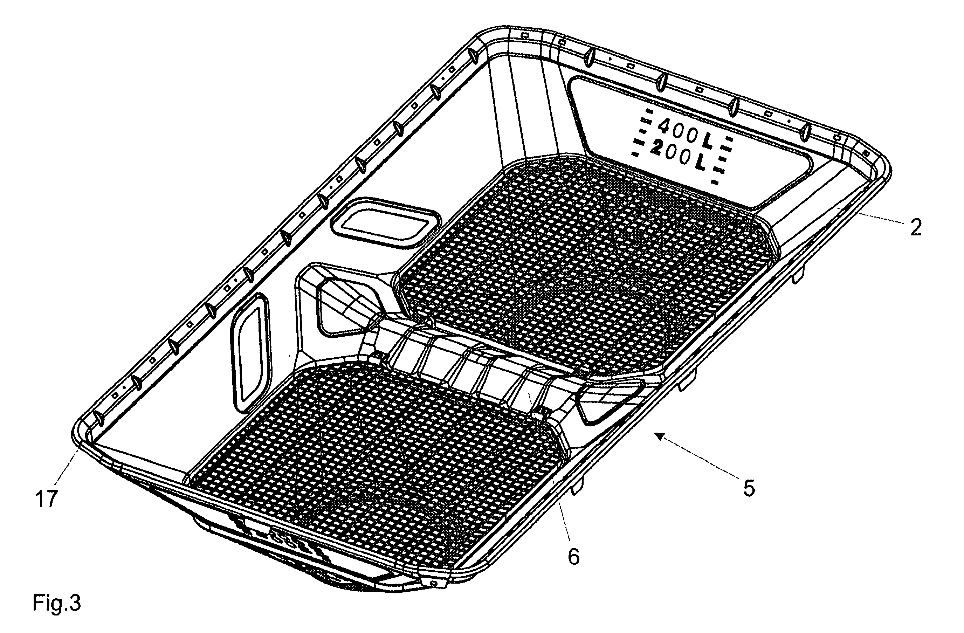

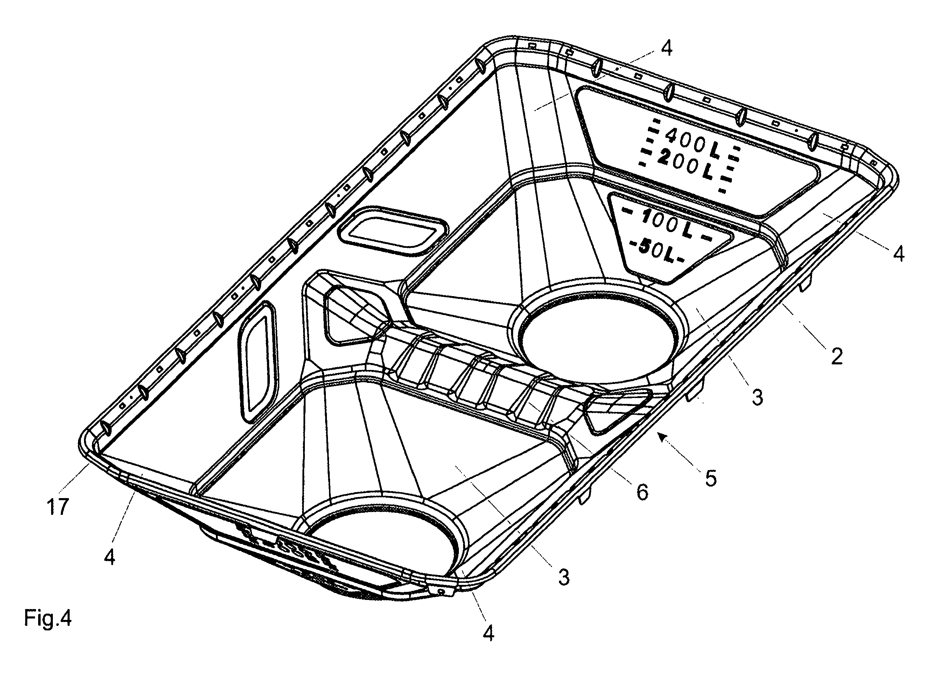

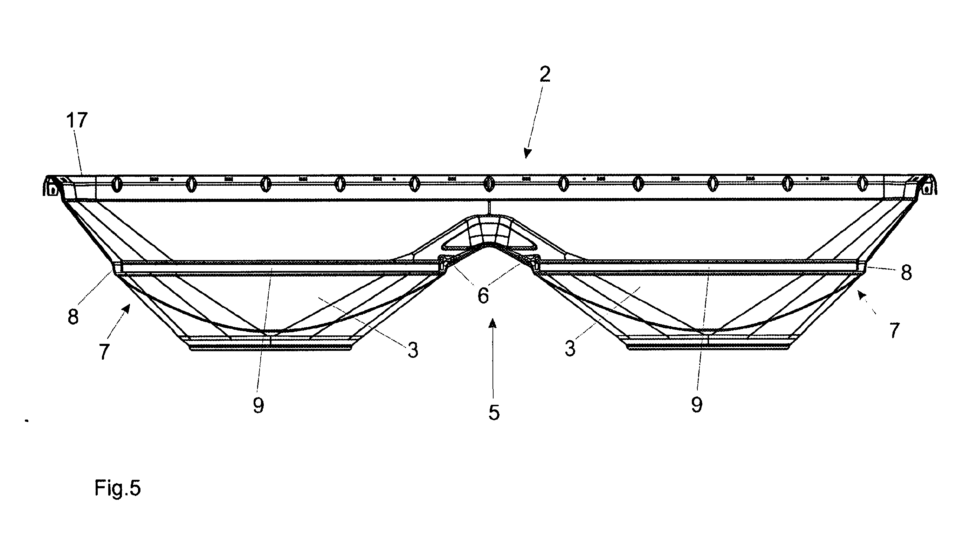

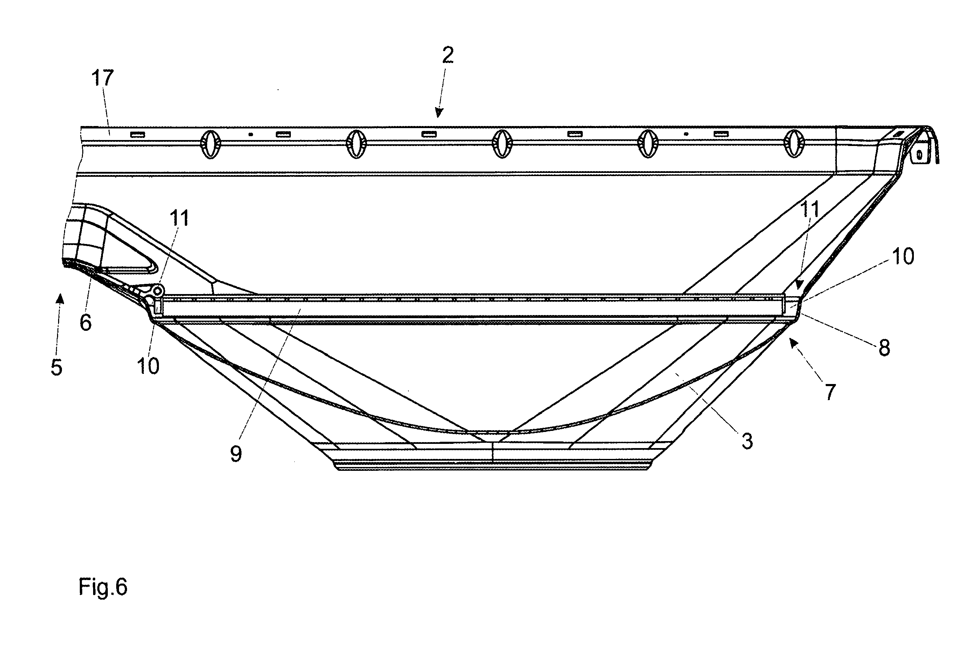

Das Baukastensystem für die erfindungsgemäße landwirtschaftliche Verteilmaschine zum Ausbringen von körnigen Materialien gemäß den Fig. 1 bis 6 weist den von den Rahmenelementen 1 getragenen Vorratsbehälter 2 auf, der quasi als Grundbehälter dient. Die Verteilmaschine ist als Zentrifugaldüngerstreuer ausgebildet und zum Ausbringen von körnigem Materialien, wie beispielsweise Mineraldünger geeignet. Der Zentrifugalstreuer weist einen von Rahmenelementen 1 getragenen Vorratsbehälter 2 auf, der in zwei Auslauftrichter 3 ausmündet.

Der Rahmen 1 ist auf seiner Vorderseite in bekannter daher nicht dargestellter Weise mit Dreipunktkupplungselementen zum Anbau an einen Dreipunktkraftheber eines Ackerschleppers ausgestattet. Der Vorratsbehälter 2 mit seinen Auslauftrichtern 3 ist einteilig aus einer Stahlplatte in seine Behälterform durch ein oder mehrere Tiefziehvorgänge als ein einziges Tiefziehteil ausgebildet. Hierdurch ergibt sich die Möglichkeit einen Vorratsbehälter 2 mit unmittelbar angeformten Auslauftrichtern 3 ohne zusätzliche Montagegänge, wie Arbeitsvorgänge zum Erstellen von Schweißverbindungen oder Schraubverbindungen zu erstellen. Hierdurch werden in erster Linie Angriffsflächen für Rostvorgänge vermieden. Weiterhin besteht durch die Ausgestaltung des Vorratsbehälters 2 als Tiefziehteil die Möglichkeit, die Behältereckbereiche 4 besonders günstig für das Nachrutschen von dem in dem Vorratsbehälter 2 sich befindlichen Materialien auszubilden.

Im mittleren Bereich 5 des Vorratsbehälters 2, der durch die Tiefziehvorgänge hergestellt ist, befindet sich ein die Auslauftrichter 3 trennendes Dachelement 6, welches durch einen durch die Tiefziehvorgänge ausgebildeten dachförmigen Bereich gebildet wird.

In den Wandungen 7 der Auslauftrichter 3 des Vorratsbehälters 2 ist ein stufenförmiger, umlaufender Absatz 8 eingeprägt bzw. eingeformt. Dieser Bereich 8 dient zur Aufnahme eines im Vorratsbehälters 2 bzw. im oberen Bereich des jeweiligen Auflauftrichter 3 angeordneten Siebelementes 9. Diese Siebelemente 9 sind im Bereich des jeweiligen stufenförmigen Absatzes 8 mittels Halterungs- oder Auflageelementen 10 angeordnet, und zwar derart, dass die Siebelemente 9 beabstandet zu den Wänden 7 des Vorratsbehälters 2 bzw. der Auslauftrichter angeordnet sind. Hierdurch ergibt sich ein Spalt 11 zwischen den Wänden 7 der Auslauftrichter 6 und dem jeweiligen Siebelement 9, so dass hier Material durchrutschen kann, damit sich keine Stauungen im Bereich der Wandungen des Vorratsbehälters 2 und Auslauftrichter 9 oberhalb der Siebelemente 9 bilden können.

Oberhalb des durch den Tiefziehvorgang ausgebildeten dachförmigen Bereiches 6 ist ein mit dem oberen Bereich des dachförmigen Elementes 6 verbundenes Aussteifungselement 12 angeordnet und mit diesem Bereich verbunden, um eine Vergrößerung der Tragfähigkeit und Stabilität des Vorratsbehälters 2 zu erreichen.

An den unteren Enden 13 der Auslauftrichter 3 sind Befestigungselemente 14 für die Anordnung der die Auslauftrichter 3 nach unten abschließenden Dosiervorrichtungen 15 angeordnet. Diese Befestigungselemente 14 sind mittels Schraub- oder Schweißverbindungen an den unteren Bereichen 13 der Auslauftrichter 3 angeordnet. Die Dosiervorrichtungen 15 weisen jeweils einen trichterförmigen Auslauftopf 16 auf, der mit den Dosiereinrichtungen, die aus einer Öffnung in dem Bodenbereich des Auslauftopfes 16 mit zugeordnetem Schieber, der die Öffnungsweite der Auslauföffnung einstellt oder verschließt, ausgestattet ist. In dem Auslauftopf 16 der Dosiervorrichtungen 15 sind Rührelemente angeordnet, welche an den Wänden der Dosiervorrichtung des Auslauftopfes 16 gelagert sind.

An dem oberen Rand 17 des als Grundbehälter dienenden Vorratsbehälters 2, der mit den Rahmenelementen 1 verbunden ist, ist ein sich an den oberen umlaufenden Bereich des Vorratbehälters 2 anschließendes Aufsatzelement 18 zur Vergrößerung des Fassungsvermögens des Vorratsbehälters 2 angeordnet. Es können auch mehrere Aufsatzelemente 18 zur Vergrößerung des Fassungsvermögens aufeinander angeordnet werden.

Der Vorratsbehälter 2 ist aus einem zumindest annähernd rostfreien oder rostträgem Material hergestellt, um so eine möglichst lange Lebensdauer der Maschine zu erreichen.

Unterhalb der Dosiervorrichtungen 15 sind die rotierend angetriebenen und mit Wurfschaufeln 19 besetzten Schleuderscheiben 20 angeordnet, denen das sich im Vorratsbehälter befindliche Material zur Breitverteilung auf der zu bestreuenden Bodenoberfläche verteilt wird.

Somit besteht das Baukastensystem für die landwirtschaftliche Verteilmaschinen im wesentlichen aus einem Gesamtvorratsbehälter, der aus einem an den Rahmenelementen 1 angeordneten und als Vorratsbehälter 2 ausgebildeten Grundbehälter, dessen Fassungsvermögen durch an dem oberen umlaufenden Bereich 19 des Grundbehälters 2 sich anschließenden Aufsatzelement 20 vergrößerbar ist, und an den jeweiligen unteren Bereichen der Auslauftrichter 3 angeordneten und Auslaufbereiche aufweisenden Dosiervorrichtungen 15 besteht.

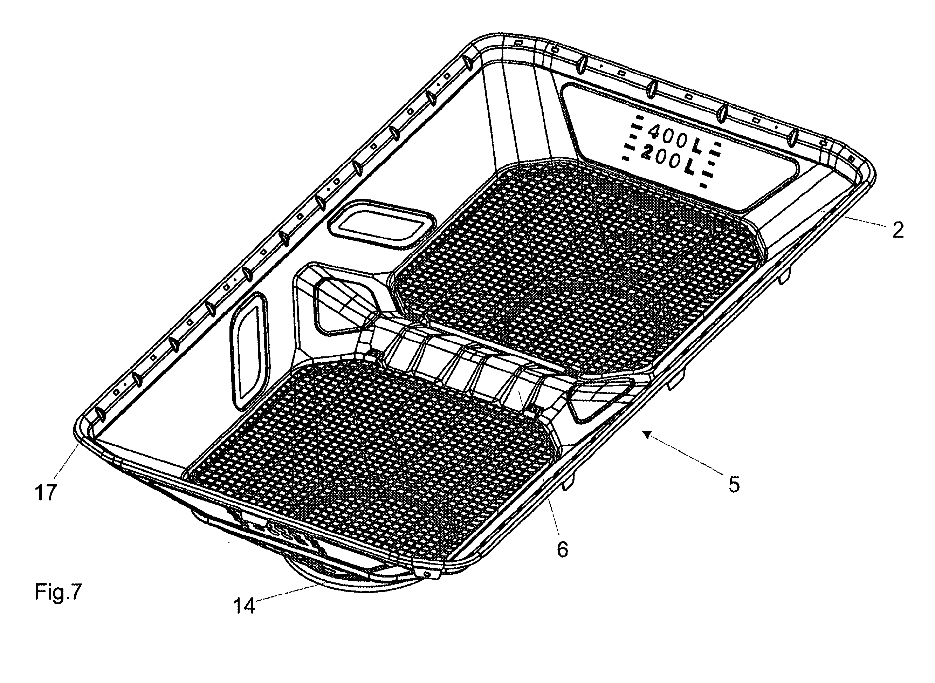

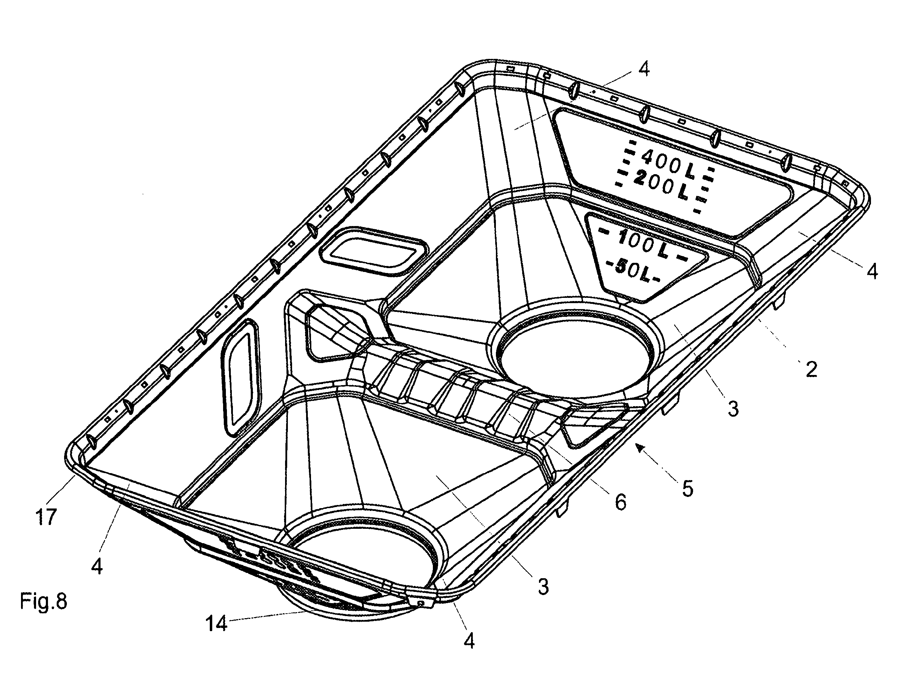

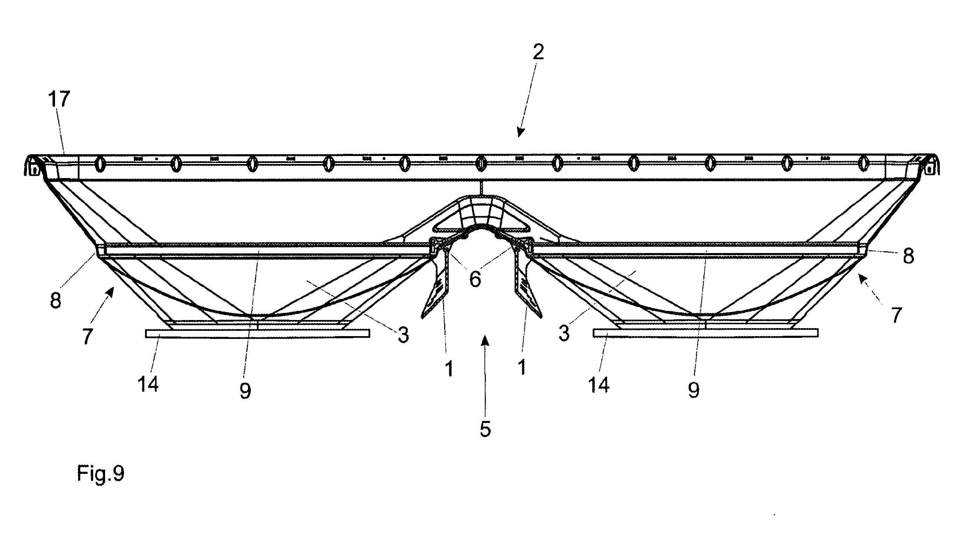

Im Rahmen des Baukastensystem kann der als Grundbehälter ausgebildete Vorratsbehälter 2 anstelle aus Stahlblech gemäß den Fig. 1 bis 6 auch entsprechen den Fig. 7 bis 10 aus meinem Kunststoffmaterial hergestellt sein.

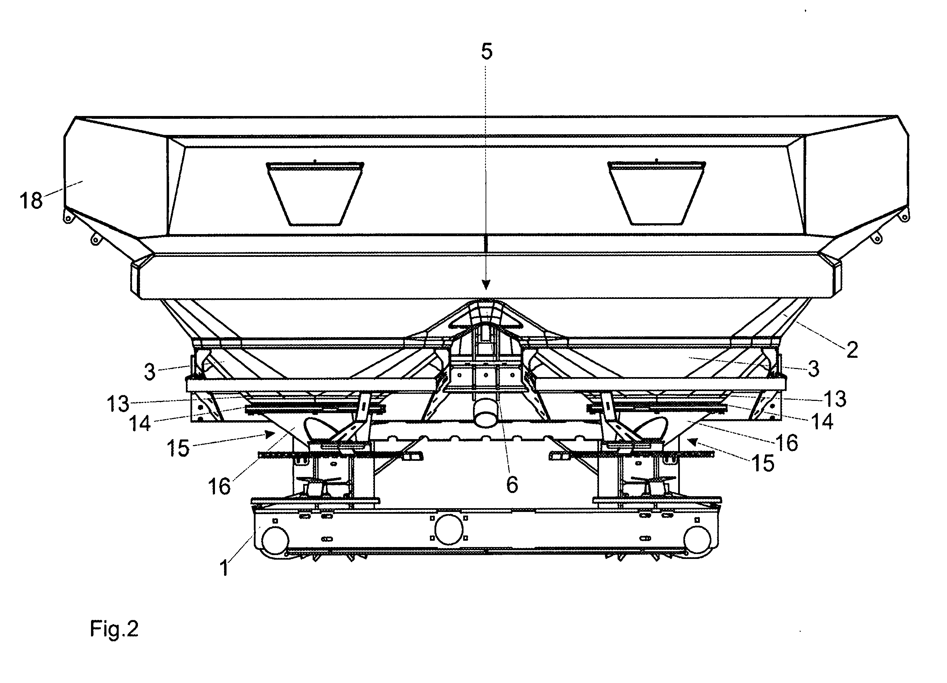

Der Vorratsbehälter 2 mit seinen Auslauftrichtern 3 gemäß den Fig. 7 bis 10 ist einteilig aus einem Kunststoffmaterial hergestellt. Dieser ist dann Bestandteil der Verteilmaschine gemäß Fig. 1 und 2 anstelle des in Tiefziehvorgängen aus Stahlblech geformten einteiligen Behälters. Hierdurch ergibt sich die Möglichkeit einen Vorratsbehälter 2 mit unmittelbar angeformten Auslauftrichtern 3 ohne zusätzliche Montagegänge, wie Arbeitsvorgänge zum Erstellen von Schweißverbindungen oder Schraubverbindungen zu erstellen. Durch die Materialauswahl werden Angriffsflächen für Rostvorgänge vermieden. Weiterhin besteht durch die Ausgestaltung des Vorratsbehälters 2 als Kunststoffteil die Möglichkeit, die Behältereckbereiche 4 besonders günstig für das Nachrutschen von dem in dem Vorratsbehälter 2 sich befindlichen Materialien auszubilden.

An den unteren Enden 13 der Auslauftrichter 3 sind Befestigungselemente 14 für die Anordnung der die Auslauftrichter 3 nach unten abschließenden Dosiervorrichtungen 15 angeordnet. Diese Befestigungselemente 14 sind an den unteren Bereichen 13 der Auslauftrichter 3 einstückig angeformt.

Der Vorratsbehälter 2 ist aus einem Kunststoffmaterial hergestellt, um so eine möglichst lange Lebensdauer der Maschine zu erreichen.

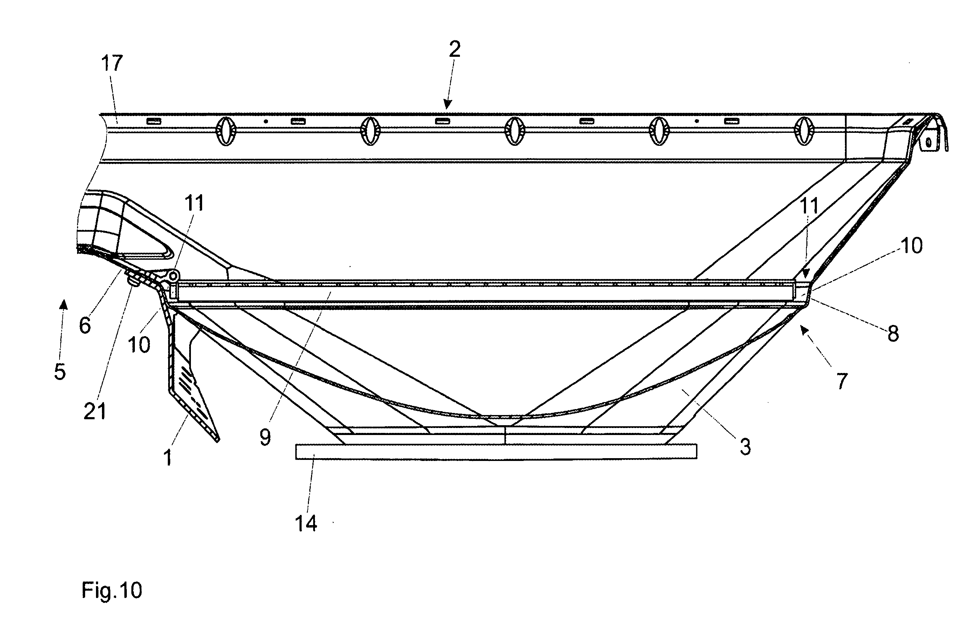

Der Vorratsbehälter 2 sitzt auf den Rahmenelementen 1 auf und ist an diesen mittels Schnappverschlüssen gesichert befestigt, wie die Fig. 10 zeigt. Ebenfalls können die Dosiervorrichtungen 15 mittels Schnappverschlüssen an den Befestigungselementen befestigt sein.

## Patentansprüche

1. Baukastensystem für eine landwirtschaftliche Verteilmaschine zum Ausbringen von körnigen Materialien mit einem von Rahmenelementen getragenen in zumindest zwei Auslauftrichter ausmündenden Vorratsbehälter, wobei die Auslauftrichter jeweils von Dosiervorrichtungen abgeschlossen sind, wobei der Vorratsbehälter (2)aus
- einem an den Rahmenelementen (1, 21) angeordneten Grundbehälter (2),
- an dem oberen umlaufenden Bereich (19) des Grundbehälter (2) zumindest einem sich anschließenden Aufsatzelement (20),
- an den jeweiligen unteren Bereichen (13, 14) der Auslauftrichter (3) angeordneten und Auslauftiereiche aufweisenden Dosiervorrichtungen (15)
besteht;
**dadurch gekennzeichnet, dass** der Grundbehälter (2) mit seinen Auslauftrichtern (3) einteilig aus einer Stahlblechplatte in seine Behälterform durch Tiefziehvorgänge als ein einziges Tiefziehteil ausgebildet ist;
dass die Auslauftrichter (3) des Grundbehälters (2) durch einen durch die Tiefziehvorgänge ausgebildeten dachförmigen Bereich (6) getrennt sind;
dass in den Wandungen (7) jedes Auslauftrichters (3) des Grundbehälters (2) ein stufenförmiger, vorzugsweise umlaufender Absatz (8) eingeprägt und/oder eingeformt ist;
und , dass im Bereich des stufenförmigen Absatzes (8) ein Siebelement (9) mittels Halterungs- und/oder Auflageelementen (10), vorzugsweise beabstandet zu den Wänden (7) des Grundbehälters (2) angeordnet ist.

2. Baukastensystem nach Anspruch 1, **dadurch gekennzeichnet, dass** oberhalb des durch den Tiefziehvorgang ausgebildeten dachförmigen Bereiches (6) ein mit diesem verbundenes Aussteifungselement (12) angeordnet ist.

3. Baukastensystem nach zumindest einem der vorstehenden Ansprüche, **dadurch gekennzeichnet, dass** an den jeweiligen unteren Bereichen (13) der Auslauftrichter (3) einen trichterförmigen Bereich aufweisende Dosiervorrichtungen (15) mit an den Wänden der Dosiervorrichtungen (15) gelagerten Rührelementen angeordnet sind.

4. Baukastensystem nach zumindest einem der vorstehenden Ansprüche, **dadurch gekennzeichnet, dass** die Verteilmaschine als Zentrifugalstreuer ausgebildet ist, dass unterhalb der Dosiervorrichtungen rotierend angetriebene mit Wurfschaufeln besetzte Schleuderscheiben angeordnet sind

5. Baukastensystem nach zumindest einem der vorstehenden Ansprüche, **dadurch gekennzeichnet, dass** die Verteilmaschine als Sä- und/oder Düngermaschine ausgebildet ist, dass die Dosiervorrichtungen als Zellendosierradsystem ausgebildet ist.

## Claims

1. Modular system for an agricultural distributing machine for discharging granular materials, comprising a storage container which is carried by frame elements and leads into at least two discharge hoppers, wherein the discharge hoppers are in each case closed off by metering devices, wherein the supply container (2) consists of
- a bottom container (2) arranged on the frame elements (1, 21),
- at least one adjoining attachment element (20) on the upper peripheral region (19) of the bottom container (2),
- metering devices (15) arranged on the respective lower regions (13, 14) of the discharge hoppers (3) and having discharge regions;
**characterized in that**
the bottom container (2) is formed integrally with its discharge hoppers (3) from a sheet steel plate into its container form by deep-drawing processes as a single deep-drawn part;
**in that** the discharge hoppers (3) of the bottom container (2) are separated by a roof-shaped region (6) formed by the deep-drawing processes;
**in that** a step-shaped, preferably peripheral shoulder (8) is stamped and/or formed into the walls (7) of each discharge hopper (3) of the bottom container (2);
and **in that** a sieve element (9) is arranged by means of holding and/or support elements (10), preferably at a distance from the walls (7) of the bottom container (2), in the region of the step-shaped shoulder (8).

2. Modular system according to Claim 1, **characterized in that** a stiffening element (12) is arranged above the roof-shaped region (6) formed by the deep-drawing process and is connected thereto.

3. Modular system according to at least one of the preceding claims, **characterized in that** metering devices (15) having a hopper-shaped region and with stirring elements mounted on the walls of the metering devices (15) are arranged at the respective lower regions (13) of the discharge hoppers (3).

4. Modular system according to at least one of the preceding claims, **characterized in that** the distributing machine is designed as a centrifugal spreader, and **in that** rotationally driven centrifugal discs equipped with roller blades are arranged below the metering devices.

5. Modular system according to at least one of the preceding claims, **characterized in that** the distributing machine is designed as a sowing and/or fertilizer machine, and **in that** the metering devices are designed as a cellular metering wheel system.

## Revendications

1. Système modulaire pour un épandeur agricole pour distribuer des matériaux en grains, comprenant un réservoir porté par des éléments de cadre débouchant dans au moins deux trémies de sortie, les trémies de sortie étant fermées à chaque fois par des dispositifs de dosage, le réservoir (2) se composant :
- d'un récipient de base (2) disposé sur les éléments de cadre (1, 21),
- d'au moins un élément de coiffe (20) se raccordant à une région périphérique supérieure (19) du récipient de base (2),
- de dispositifs de dosage (15) disposés sur les régions inférieures respectives (13, 14) des trémies de sortie (3) et présentant des régions de sortie ;
**caractérisé en ce que** le récipient de base (2) est réalisé dans sa forme de récipient d'une seule pièce avec ses trémies de sortie (3), à partir d'une plaque en tôle d'acier, par des opérations d'emboutissage profond en tant que pièce emboutie unique ;
**en ce que** les trémies de sortie (3) du récipient de base (2) sont séparées par une région (6) en forme de toit réalisée par les opérations d'emboutissage profond ;
**en ce que** dans les parois (7) de chaque trémie de sortie (3) du récipient de base (2) est imprimé et/ou façonné un épaulement (8) en forme de gradin, de préférence périphérique,
et **en ce que** dans la région de l'épaulement (8) en forme de gradin est disposé un élément de tamis (9), au moyen d'éléments de fixation et/ou d'appui (10), de préférence à distance des parois (7) du récipient de base (2).

2. Système modulaire selon la revendication 1, **caractérisé en ce qu'**au-dessus de la région (6) en forme de toit réalisée par l'opération d'emboutissage profond est disposé un élément de rigidification (12) connecté à celle-ci.

3. Système modulaire selon au moins l'une quelconque des revendications précédentes, **caractérisé en ce qu'**au niveau des régions inférieures respectives (13) de la trémie de sortie (3) sont disposés des dispositifs de dosage (15) présentant une région en forme d'entonnoir, avec des éléments agitateurs montés sur les parois des dispositifs de dosage (15).

4. Système modulaire selon au moins l'une quelconque des revendications précédentes, **caractérisé en ce que** l'épandeur est réalisé sous forme de distributeur centrifuge, et **en ce qu'**en dessous des dispositif de dosage sont disposés des disques centrifugeurs munis de pales d'éjection entraînés en rotation.

5. Système modulaire selon au moins l'une quelconque des revendications précédentes, **caractérisé en ce que** l'épandeur est réalisé sous forme de semoir ou d'épandeur d'engrais, et **en ce que** les dispositifs de dosage sont réalisés sous forme de système de dosage à roue cellulaire.
